Europäisches Patentamt

European Patent Office

Office européen des brevets

(11) Publication number: **0 243 211**
**A1**

# (12) EUROPEAN PATENT APPLICATION

(21) Application number: 87303716.2

(22) Date of filing: 27.04.87

(51) Int. Cl.³: **F 16 L 55/16**
**F 16 L 1/04**

(30) Priority: 25.04.86 GB 8610232
28.04.86 GB 8610367

(43) Date of publication of application:
28.10.87 Bulletin 87/44

(84) Designated Contracting States:
AT BE CH DE ES FR GB GR IT LI LU NL SE

(71) Applicant: HOULDER OFFSHORE LIMITED
53 Leadenhall Street
London, EC3A 2BR(GB)

(72) Inventor: Houlder, John Maurice
Houlder Offshore Limited 53 Leadenhall Street
London EC 3A 2BR(GB)

(74) Representative: Cline, Roger Ledlie et al,
EDWARD EVANS & CO. Chancery House 53-64 Chancery
Lane
London WC2A 1SD(GB)

(54) Joining pipes together.

(57) In order to align the bores of two pipes to be joined together, the method of the invention comprises mounting a pig inside the end of the one of the pipes, controlling the pig by electromagnetic signals transmitted through a wall of one of said pipes to extend the pig into the bore of the adjacent pipe and to expand radial clamps (18, 19, 15) against the inside walls of the pipes at their adjacent end portions to hold the pipes in alignment for the ends of the pipes to be joined together. A pig is also provided for carrying out the aligning method.

FIG.1.

EP 0 243 211 A1

- 1 -

JOINING PIPES TOGETHER

A pipeline is generally formed by welding together lengths of pipe and it is important that the two ends of adjacent pipes should be accurately circular and accurately aligned during the joining operation. It has previously been proposed to shape and hold such adjacent pipes in position by means acting on the exterior of the pipes, but the present invention is concerned with acting on the interior of the pipes by means of a pig. A pig is a body which can be moved along the bore of a pipe for various uses, such as transporting a camera along the pipe for inspection purposes.

According to one aspect of the invention there is provided a method of joining two pipes together with their bores in alignment, the method comprising mounting a pig inside the end of the one of the pipes, controlling the pig by electromagnetic signals transmitted through a wall of one of said pipes to extend the pig into the bore of the adjacent pipe and to expand radial clamps against the inside walls of the pipes at their adjacent end portions to hold the pipes in alignment for the ends of the pipes to be joined together. After joining, the clamps are withdrawn and the pig is moved along the pipeline away from the joint. In all aspects, the joining is preferably by welding.

According to another aspect of the invention there is provided apparatus for joining together two pipes, the apparatus comprising a pig for insertion in the bore of one of the pipes, means in the pig for receiving electromagnetic control signals transmitted through a wall of one of the pipes, means in the pig to extend it into the bore of the adjacent pipe in response to the control signals, means in the pig for expanding radial clamps against the inside walls of the pipes at their adjacent end portions to hold the pipes in alignment for joining together.

An example of the invention will now be described with reference to the accompanying drawings in which:

Figure 1 is a perspective view of a pig installed inside a pup-piece; and

Figure 2 is a side elevation of the pig, one half in the stowed position, the other half in the operative position,

Figures 3 to 7 show stages in a pipe welding sequence.

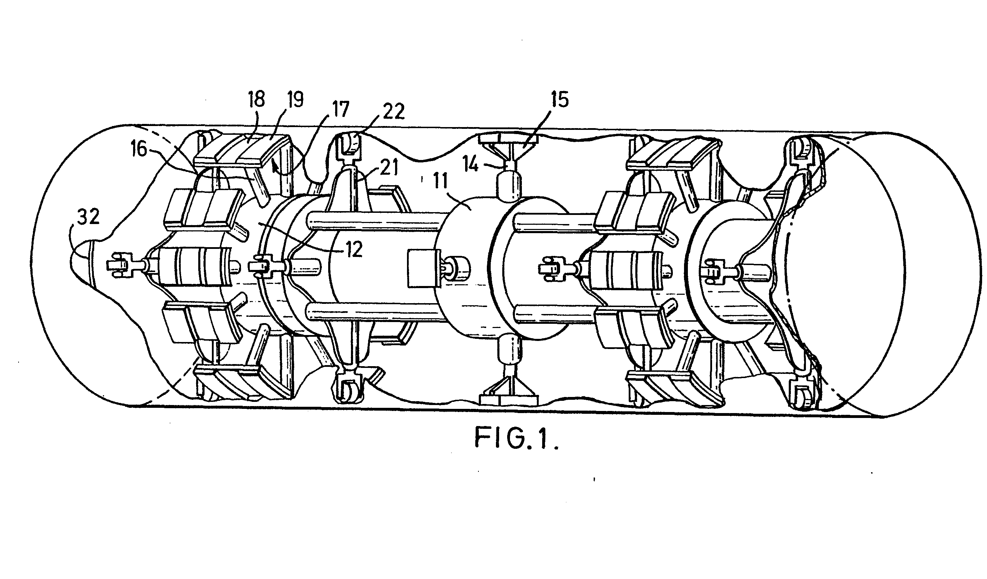

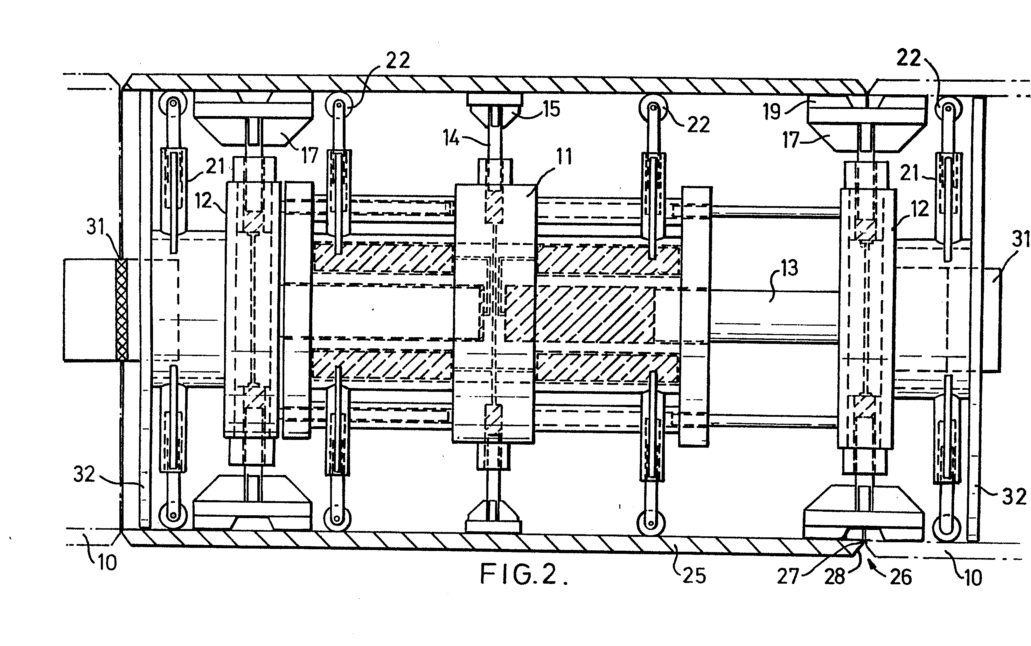

As can best be seen from Figures 1 and 2, the pig comprises a central clamp assembly 11 and a further clamp assembly 12 at each end, connected to the central assembly 11 by extendable paraxial rams 13. The central assembly 11 comprises four extendable rams 14 carrying clamp heads 15 for clamping the assembly 11 centrally in a pipe 10. Each further assembly 12 comprises twelve radially extendable rams 16, each ram having a clamp head 17 formed with a central recess 18 and a side piece 19 on either side of said recess 18. Separate clamp heads and even separate pigs could be used for shaping the adjacent ends before joining. On either side of the further assemblies 12, the pig is aligned with the pipe by means of a carriage 21 having four equally spaced polyurethane wheels 22 (which are normally spaced from the pipe when the clamp heads 15,17 engage the pipe so as to minimise heat transfer during welding) but which run along the interior surface of the pipe when the pig is moved within the pipe when the clamp heads 15,17 are retracted.

In this embodiment, the pig is mounted within a short length of pipe called a pup-piece 25 with the central asssembly clamped against the interior walls of the pup-piece at its centre line and the paraxial rams 13 retracted so that the pig is entirely contained within the pup-piece 25. The pup-piece 25 is transported to the welding site and is aligned with the two pipes 10 to be joined, the two ends of the pipes to be joined having been previously machined and accurately positioned. The machining of the ends of the pipes and the pup-piece form an annulus 26 whose inner portion 27 to be filled with weld material is narrow and parallel sided (for the root weld), and whose outer portion 28 tapers to a wider dimension at the pipe circumference (for the cap weld). The paraxial rams 13 of the pig are then extended to move the further assemblies 12 so that they partly extend into the ends of the adjacent pipes to be joined, with the recesses 18 in the clamp heads 17 aligned with the join between the pup-piece 25 and the pipes 10 to be welded. The rams 16 are then extended to hold the pup-piece and the adjacent pipes in accurate alignment and to correct any ovality in the pipes. With the pipes clamped in circular shapes and accurate alignment welding is then carried out from the exterior of the pipes and the pipe pup-piece, the recesses 18 in the clamp heads 17 being separated from the joint to be welded although the adjacent side pieces 19 of the clamp heads continue to engage the pup-piece and pipes. The clamping, aligning and welding can be undertaken on the two ends of the pup-piece simultaneously, so that the adjustment of one end does not upset the alignment and shape of the other end. After welding, the further assemblies are withdrawn by the paraxial rams to a position entirely within the pup-piece, and radio-active sources 31 on the axis of the pig are energised or unshielded so as to direct beams of radio-active particles from the axis of the pipeline to the exterior through the welded joints for examination of the weld. Less power is required for the radio-active sources since the radiation only has to pass through one thickness of weld joint to the detectors, compared to having to pass through two thicknesses of pipe wall when the source is outside the pipe on one extreme of a diameter and a sensor outside the pipe at the other extreme. It is convenient to have the radio-active sources mounted on the same apparatus as the clamping device. In Figure 2, the sources 31 are shown in the operative position on the left and the stowed position on the right.

The ends of the pig are provided with a diaphragm 32 at each end which is a close fit with the interior of the pipe and the pig is removed from the pup-piece by applying positive or negative pressure at one end of the pipeline after the central clamps have been withdrawn from contact with the pup-piece. The pig can also move itself on the "earthworm principle", expanding rear clamps 12 into engagement with the the pipe and contracting front clamps 12, extending its length by means of the paraxial rams 13, expanding the front clamps into engagement with the pipe and contacting the rear clamps, and reducing its length, and so on in cycles.

The pig contains its own power supplies, and its operation is controlled by electromagnetic control signals which are transmitted through the walls of the pup-piece from a location outside the pipe, either under the control of divers or from a transmission line extending from the sea surface or other location. This method of control has particular utility when aligning pipes for joining in deep sea locations.-

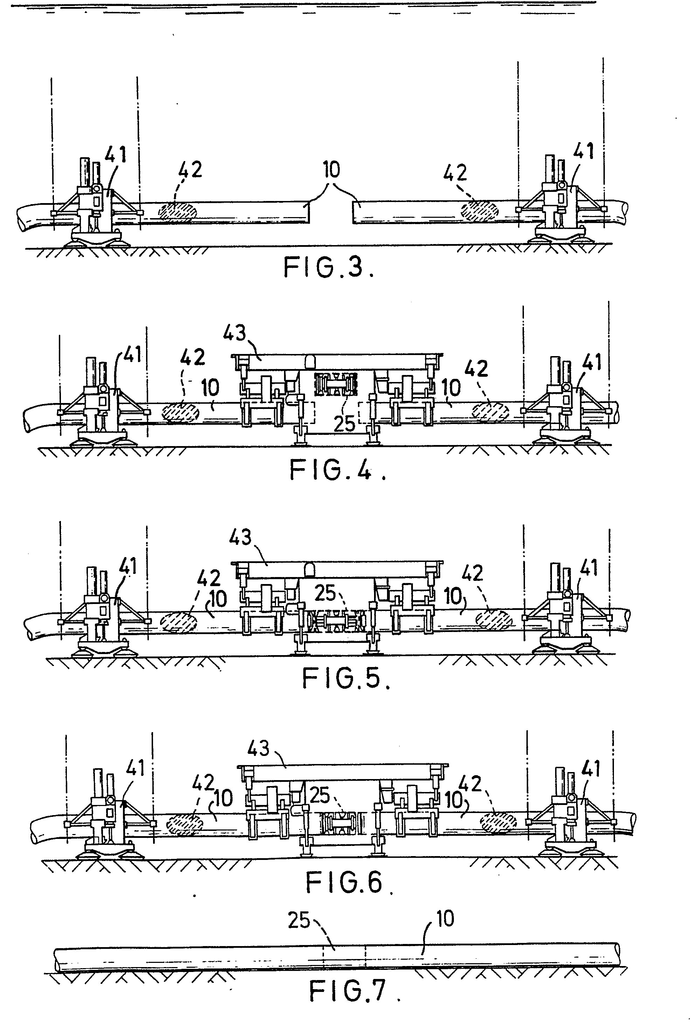

Figure 3 shows two ends of a pipeline 10 which are to be joined, each end having been raised from the sea-bed by an H-frame 41. Inflatable pigs 42 have been inserted by divers into the ends of the pipes to isolate the portion of the pipeline at which the join is to be made from the remainder of the pipeline. As shown in Figure 4 the pup-piece 25 is transported to the weld site in a working chamber 43 which is placed over the ends of the two pipes to be joined and contains the alignment pig within the pup-piece as described above. The chamber 43 is pumped free of water and is supplied with the correct environment for machining and welding. Divers enter the chamber 43 from a diving bell which is lowered into position from the surface. The ends of the pipes to be joined are cut back and accurately machined to the exact spacing required for the insertion of a pup-piece and welding. The pup-piece 25 is then lowered into position from the supporting frame 43 in alignment with the ends of the pipes to the position shown in Figure 5 and the further assemblies 12 are extended across the junctions with the pipes. After the pipes have been forced into the shape which is circular within the required tolerances and the root weld operation has been made, the further assemblies 12 are withdrawn as shown in Figure 6 and the radio-active sources 31 energised (or exposed) to carry out a first weld testing operation. If the root weld is found satisfactory, the weld is capped by further weld material and the testing operation repeated. Figure 7 shows the completed pipeline from which the working chamber 43 and the supporting H-frames 41 have been removed, leaving the jointed pipeline 10 resting on the seabed. The pigs 42 and the clamping pig have been removed to one end of the pipeline, preferably by increasing or decreasing the pressure at a remote point in the pipeline.

CLAIMS

1.    A method  of aligning  the bores of two pipes which are to be joined together,  the method comprising mounting  a pig  inside the end of the one of the pipes, controlling the pig by electromagnetic signals transmitted through a wall of one of  said pipes  to extend the pig  into the  bore of  the adjacent  pipe and to expand radial clamps against the inside walls of the pipes at their  adjacent end portions to  hold the  pipes in alignment for the ends of the pipes to be joined together.

2.    A method as claimed in claim 1 comprising transporting the pig to the  pipes to be joined in a separate pup-piece and aligning and then joining the ends of the pup piece to the respective end of the pipes to be joined.

3.    Apparatus for  aligning the  bores of two pipes to be  joined together,  the apparatus comprising a pig for insertion in the bore of one of the pipes, means in the pig for receiving electromagnetic control signals transmitted  through a  wall of  one of  the pipes, means in the pig to extend it into the bore of the adjacent pipe in response to the control signals,  means in  the pig  for expanding radial clamps  against the  inside walls  of the pipes  at  their adjacent end portions to hold  the pipes  in alignment  for joining together.

FIG.1.

FIG.2.

0243211

0243211

FIG.3.

FIG.4.

FIG.5.

FIG.6.

FIG.7.

0243211

## EUROPEAN SEARCH REPORT

European Patent Office

Application number

EP 87 30 3716

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 197 195 (J.S. WORK et al.) * column 1, lines 1-38; claim 4; figure 1 * | 1,3 | F 16 L 55/16 F 16 L 1/04 |
| | --- | | |
| A | US-A-3 270 411 (R. THOMAS) * figures 6, 7; column 5, line 64 - column 6, line 7 * | 1,3 | |
| | --- | | |
| A | US-A-2 638 063 (MEARNS) * column 1, lines 1-40; figure 1 * | 1,3 | |
| | --- | | |
| A | US-A-3 183 939 (IMMEL) * claim 1; figures * | 1-3 | |
| | --- | | |
| A | GB-A-2 082 708 (COMPAGNIE FRANCAISE DES PETROLES) | | TECHNICAL FIELDS SEARCHED (Int. Cl.4) |
| | ----- | | F 16 L 55/00 F 16 L 1/00 |

The present search report has been drawn up for all claims

| Place of search | Date of completion of the search | Examiner |
|---|---|---|
| BERLIN | 23-07-1987 | SCHAEFFLER C.A.A. |